# EUROPEAN PATENT APPLICATION

(11) **EP 2 278 247 A1**
(43) Date of publication of application: **26.01.2011**
(21) Application number: 10181636.1
(22) Date of filing: 05.12.2001
(51) Int. Cl.: F28D 7/00, B01J 8/02, C01B 3/38

(54) **Apparatus and method for heating catalyst for start-up of a compact fuel processor**

(30) Priority: 05.12.2000 US 251226 P
(62) Divisional of application: 01995464.3
(71) Applicant: TEXACO DEVELOPMENT CORPORATION, San Ramon, CA 94583-2324 (US)
(72) Inventor: The designation of the inventor has not yet been filed
(74) Representative: Nash, David Allan

(57) **Abstract**

A reactor module for use in a compact fuel processor, comprising:
a catalyst bed; a cooling coil positioned substantially within the catalyst bed for removing excess heat during normal operation; and an electrical heating element positioned within the cooling coil, the heating element capable of heating the catalyst to a desired reaction temperature.

## Description

### BACKGROUND OF THE INVENTION

### APPARATUS AND METHOD FOR HEATING CATALYST FOR START-UP OF A COMPACT FUEL PROCESSOR

Fuel cells provide electricity from chemical oxidation-reduction reactions and possess significant advantages over other forms of power generation in terms of cleanliness and efficiency. Typically, fuel cells employ hydrogen as the fuel and oxygen as the oxidizing agent. The power generation is proportional to the consumption rate of the reactants.

A significant disadvantage which inhibits the wider use of fuel cells is the lack of a widespread hydrogen infrastructure. Hydrogen has a relatively low volumetric energy density and is more difficult to store and transport than the hydrocarbon fuels currently used in most power generation systems. One way to overcome this difficulty is the use of reformers to convert the hydrocarbons to a hydrogen rich gas stream which can be used as a feed for fuel cells.

Hydrocarbon-based fuels, such as natural gas, LPG, gasoline, and diesel, require conversion processes to be used as fuel sources for most fuel cells. Current art uses multistep processes combining an initial conversion process with several clean-up processes. The initial process is most often steam reforming (SR), autothermal reforming (ATR), catalytic partial oxidation (CPOX), or non-catalytic partial oxidation (POX). The clean-up processes are usually comprised of a combination of desulfurization, high temperature water-gas shift, low temperature water-gas shift, selective CO oxidation, or selective CO methanation. Alternative processes include hydrogen selective membrane reactors and filters.

Despite the above work, there remains a need for a simple unit for converting a hydrocarbon fuel to a hydrogen rich gas stream for use with a fuel cell. A practical obstacle facing any solution to this problem is the need to start-up catalyst beds and maintain desired reaction temperatures during transient operation. The present invention addresses this need.

### SUMMARY OF THE INVENTION

The present invention specifically relates to the methods and apparatus for heating a catalyst bed for start-up and for providing heat to a catalyst bed during transient operation to maintain desired reaction temperatures. Such methods and apparatus can be used in a fuel processor so as to make the start-up of the fuel processor faster and easier. In fuel processors there are several catalysts that may be used with the present invention, including but not limited to autothermal reforming catalysts, partial oxidation catalysts, steam reforming catalysts, water gas shift catalysts, preferential oxidation catalysts, and sulfur absorbents, as well as with anode tailgas oxidation catalysts associated with an adjoining fuel cell.

As embodied by the present invention an electrical heating element may directly or indirectly heat the catalyst and thus rapidly obtain the desired reaction temperature within the catalyst bed. The direct heating of catalyst is achieved by having direct contact of the heater element with the catalyst. Indirect heating is achieved by direct heating of a fluid, such as a process flow, which in turn flows through the catalyst, thereby transferring heat to the catalyst. Additionally, indirect heating may be achieved by placing the heating element within a sheath which is then either in direct contact with the catalyst or fluid which flows through the catalyst. As is contemplated within the scope of the present invention, a wide variety of catalyst forms may employ a catalyst heater including pellets, extrudates, spheres, and monoliths. In one illustrative embodiment of the present invention a catalyst heater in accordance with this invention can be made of any resistive wire, cartridges, or rods that can be formed as outlined below. A power source, such as an electric power source, provides the energy to produce the heat that preheats the catalyst bed.

One illustrative embodiment of the present invention is a reactor in a fuel processor that includes a catalyst bed, a cooling coil positioned within the catalyst bed for removing excess heat during normal operation, and an electrical heating element positioned within the cooling coil for heating the catalyst to a desired reaction temperature during start-up and during transient operation. Such a preferred and illustrative example is generally referred to in the present disclosure as sheathed heating. Important illustrative advantages of this illustrative embodiment include: the provision of heat to the catalyst for fast and efficient start-up, the preheating of the hydrocarbon fuel feed to the fuel processor. and it provides assistance to the reactor in maintaining reaction temperature during transient operation.

### BRIEF DESCRIPTION OF THE DRAWINGS

The description is presented with reference to the accompanying drawings in which:
FIG. 1 depicts a simple process flow diagram for a fuel processor.
FIG. 2 illustrates a compact fuel processor; and
FIG. 3 illustrates one illustrative embodiment of a face heater for a catalyst bed.
FIG. 4 illustrates one illustrative embodiment of weaving a monolithic catalyst bed with an electrical heating element.
FIG. 5 illustrates one illustrative embodiment of wrapping a monolithic catalyst bed with an electrical heating element.

### DESCRIPTION OF ILLUSTRATIVE EMBODIMENTS

The present invention is generally directed to an apparatus and method for heating a catalyst bed for start-up and for providing heat to a catalyst bed during transient operation to maintain desired reaction temperatures. In a preferred aspect, the apparatus and method described herein relate to providing heat to catalyst beds in a compact fuel processor for producing a hydrogen rich gas stream from a hydrocarbon fuel feed. Hydrogen rich gas produced from such compact fuel processors will have increasing importance in the development of fuel cells, including fuel cells used to power automotive vehicles. However, other possible uses are contemplated for the apparatus and methods described herein, including the start-up and reaction temperature maintenance for exothermic catalyst beds not in fuel processor service. Accordingly, while the invention is described herein as being used in conjunction with compact fuel processors and fuel cells, the scope of the invention is not limited to such use.

Each of the illustrative embodiments of the present invention relates to exothermic catalyst beds associated with fuel processors with hydrocarbon fuel feed being directed through the fuel processor. The hydrocarbon fuel may be liquid or gas at ambient conditions as long as it can be vaporized. As used herein the term "hydrocarbon" includes organic compounds having C-H bonds which are capable of producing hydrogen from a partial oxidation or steam reforming reaction. The presence of atoms other than carbon and hydrogen in the molecular structure of the compound is not excluded. Thus, suitable fuels for use in the method and apparatus disclosed herein include, but are not limited to hydrocarbon fuels such as natural gas, methane, ethane, propane, butane, naphtha, gasoline, and diesel fuel, and alcohols such as methanol, ethanol, propanol, and the like.

The fuel processor feeds include hydrocarbon fuel, oxygen, and water. The oxygen can be in the form of air, enriched air, or substantially pure oxygen. The water can be introduced as a liquid or vapor. The composition percentages of the feed components are determined by the desired operating conditions, as discussed below.

The fuel processor effluent stream includes hydrogen and carbon dioxide and can also include some water, unconverted hydrocarbons, carbon monoxide, impurities (e.g. hydrogen sulfide and ammonia) and inert components (e.g., nitrogen and argon, especially if air was a component of the feed stream).

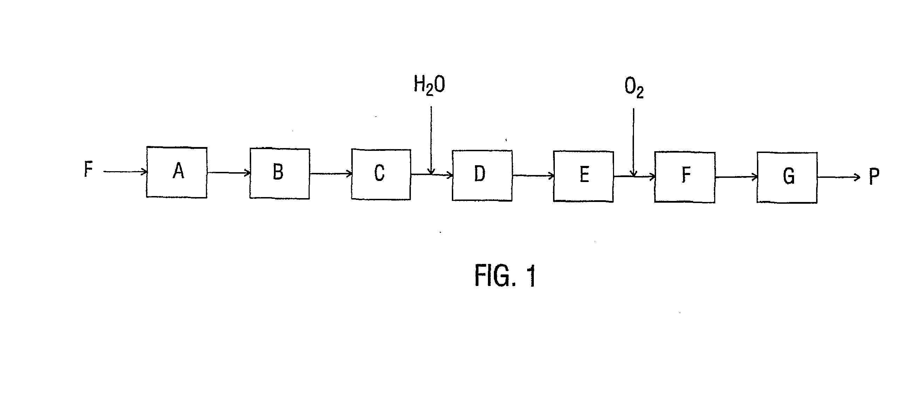

Figure 1 depicts a general process flow diagram for a fuel processor. One of skill in the art should appreciate that a certain amount of progressive order is needed in the flow of the reactants through the reactors disclosed herein.

Process step A is an autothermal reforming process in which two reactions, partial oxidation (formula I, below) and optionally also steam reforming (formula II, below), are combined to convert the feed stream F into a synthesis gas containing hydrogen and carbon monoxide. Formulas I and II are exemplary reaction formulas wherein methane is considered as the hydrocarbon:

CH₄ + ½O₂ → 2H₂ + CO (I)

CH₄ + H₂O → 3 H₂ + CO (II)

The partial oxidation reaction occurs very quickly to the complete conversion of oxygen added and produces heat. The steam reforming reaction occurs slower and consumes heat. A higher concentration of oxygen in the feed stream favors partial oxidation whereas a higher concentration of water vapor favors steam reforming. Therefore, the ratios of oxygen to hydrocarbon and water to hydrocarbon become characterizing parameters. These ratios affect the operating temperature and hydrogen yield.

The operating temperature of the autothermal reforming step can range from about 550°C to about 900°C, depending on the feed conditions and the catalyst. The invention uses a catalyst bed of a partial oxidation catalyst with or without a steam reforming catalyst. The catalyst may be in any form including pellets, spheres, extrudate, monoliths, and the like. Partial oxidation catalysts should be well known to those with skill in the art and are often comprised of noble metals such as platinum, palladium, rhodium, and/or ruthenium on an alumina washcoat on a monolith, extrudate, pellet or other support. Non-noble metals such as nickel or cobalt have been used. Other washcoats such as titania, zirconia, silica, and magnesia have been cited in the literature. Many additional materials such as lanthanum, cerium, and potassium have been cited in the literature as "promoters" that improve the performance of the partial oxidation catalyst.

Steam reforming catalysts should be known to those with skill in the art and can include nickel with amounts of cobalt or a noble metal such as platinum, palladium, rhodium, ruthenium, and/or iridium. The catalyst can be supported, for example, on magnesia, alumina, silica, zirconia, or magnesium aluminate, singly or in combination. Alternatively, the steam reforming catalyst can include nickel, preferably supported on magnesia, alumina, silica, zirconia, or magnesium aluminate, singly or in combination, promoted by an alkali metal such as potassium.

Process step B is a cooling step for cooling the synthesis gas stream from process step A to a temperature of from about 200°C to about 600°C, preferably from about 300°C to about 500°C, and more preferably from about 375°C to about 425°C, to optimize the temperature of the synthesis gas effluent for the next step. This cooling may be achieved with heat sinks, heat pipes or heat exchangers depending upon the design specifications and the need to recover / recycle the heat content of the gas stream. One illustrative embodiment for step B is the use of a heat exchanger utilizing feed stream F as the coolant circulated through the heat exchanger. The heat exchanger can be of any suitable construction known to those with skill in the art including shell and tube, plate, spiral, etc. Alternatively, or in addition thereto, cooling step B may be accomplished by injecting additional feed components such as fuel, air or water. Water is preferred because of its ability to absorb a large amount of heat as it is vaporized to steam. The amounts of added components depend upon the degree of cooling desired and are readily determined by those with skill in the art.

Process step C is a purifying step. One of the main impurities of the hydrocarbon stream is sulfur, which is converted by the autothermal reforming step A to hydrogen sulfide. The processing core used in process step C preferably includes zinc oxide and/or other material capable of absorbing and converting hydrogen sulfide, and may include a support (e.g., monolith, extrudate, pellet etc.). Desulfurization is accomplished by converting the hydrogen sulfide to water in accordance with the following reaction formula III:

H₂S + ZnO → H₂O + ZnS (III)

Other impurities such as chlorides can also be removed. The reaction is preferably carried out at a temperature of from about 300°C to about 500°C, and more preferably from about 375°C to about 425°C. Zinc oxide is an effective hydrogen sulfide absorbent over a wide range of temperatures from about 25°C to about 700°C and affords great flexibility for optimizing the sequence of processing steps by appropriate selection of operating temperature.

The effluent stream may then be sent to a mixing step D in which water is optionally added to the gas stream. The addition of water lowers the temperature of the reactant stream as it vaporizes and supplies more water for the water gas shift reaction of process step E (discussed below). The water vapor and other effluent stream components are mixed by being passed through a processing core of inert materials such as ceramic beads or other similar materials that effectively mix and/or assist in the vaporization of the water. Alternatively, any additional water can be introduced with feed, and the mixing step can be repositioned to provide better mixing of the oxidant gas in the CO oxidation step G disclosed below.

Process step E is a water gas shift reaction that converts carbon monoxide to carbon dioxide in accordance with formula IV:

H₂O + CO → H₂ + CO₂ (IV)

This is an important step because carbon monoxide, in addition to being highly toxic to humans, is a poison to fuel cells. The concentration of carbon monoxide should preferably be lowered to a level that can be tolerated by fuel cells, typically below 50 ppm. Generally, the water gas shift reaction can take place at temperatures of from 150°C to 600°C depending on the catalyst used. Under such conditions, most of the carbon monoxide in the gas stream is converted in this step.

Low temperature shift catalysts operate at a range of from about 150°C to about 300°C and include for example, copper oxide, or copper supported on other transition metal oxides such as zirconia, zinc supported on transition metal oxides or refractory supports such as silica, alumina, zirconia, etc., or a noble metal such as platinum, rhenium, palladium, rhodium or gold on a suitable support such as silica, alumina, zirconia, and the like.

High temperature shift catalysts are preferably operated at temperatures ranging from about 300° to about 600°C and can include transition metal oxides such as ferric oxide or chromic oxide, and optionally including a promoter such as copper or iron silicide. Also included, as high temperature shift catalysts are supported noble metals such as supported platinum, palladium and/or other platinum group members.

The processing core utilized to carry out this step can include a packed bed of high temperature or low temperature shift catalyst such as described above, or a combination of both high temperature and low temperature shift catalysts. The process should be operated at any temperature suitable for the water gas shift reaction, preferably at a temperature of from 150°C to about 400°C depending on the type of catalyst used. Optionally, a cooling element such as a cooling coil may be disposed in the processing core of the shift reactor to lower the reaction temperature within the packed bed of catalyst. Lower temperatures favor the conversion of carbon monoxide to carbon dioxide. Also, a purification processing step C can be performed between high and low shift conversions by providing separate steps for high temperature and low temperature shift with a desulfurization module between the high and low temperature shift steps.

Process step F is a cooling step performed in one illustrative embodiment by a heat exchanger. The heat exchanger can be of any suitable construction including shell and tube, plate, spiral, etc. Alternatively a heat pipe or other form of heat sink may be utilized. The goal of the heat exchanger is to reduce the temperature of the gas stream to produce an effluent having a temperature preferably in the range of from about 90°C to about 150°C.

Oxygen is added to the process in step F. The oxygen is consumed by the reactions of process step G described below. The oxygen can be in the form of air, enriched air, or substantially pure oxygen. The heat exchanger may by design provide mixing of the air with the hydrogen rich gas. Alternatively, the illustrative embodiment of process step D may be used to perform the mixing.

Process step G is an oxidation step wherein almost all of the remaining carbon monoxide in the effluent stream is converted to carbon dioxide. The processing is carried out in the presence of a catalyst for the oxidation of carbon monoxide and may be in any suitable form, such as pellets, spheres, monolith, etc. Oxidation catalysts for carbon monoxide are known and typically include noble metals (e.g., platinum, palladium) and/or transition metals (e.g., iron, chromium, manganese), and/or compounds of noble or transition metals, particularly oxides. A preferred oxidation catalyst is platinum on an alumina washcoat. The washcoat may be applied to a monolith, extrudate, pellet or other support. Additional materials such as cerium or lanthanum may be added to improve performance. Many other formulations have been cited in the literature with some practitioners claiming superior performance from rhodium or alumina catalysts. Ruthenium, palladium, gold, and other materials have been cited in the literature as being active for this use.

Two reactions occur in process step G: the desired oxidation of carbon monoxide (formula V) and the undesired oxidation of hydrogen (formula VI) as follows:

CO + ½O₂ → CO₂ (V)

H₂ + ½O₂ → H₂O (VI)

The preferential oxidation of carbon monoxide is favored by low temperatures. Since both reactions produce heat it may be advantageous to optionally include a cooling element such as a cooling coil disposed within the process. The operating temperature of process is preferably kept in the range of from about 90°C to about 150°C. Process step G preferably reduces the carbon monoxide level to less than 50 ppm, which is a suitable level for use in fuel cells, but one of skill in the art should appreciate that the present invention can be adapted to produce a hydrogen rich product with of higher and lower levels of carbon monoxide.

The effluent exiting the fuel processor is a hydrogen rich gas containing carbon dioxide and other constituents which may be present such as water, inert components (e.g., nitrogen, argon), residual hydrocarbon, etc. Product gas may be used as the feed for a fuel cell or for other applications where a hydrogen rich feed stream is desired. Optionally, product gas may be sent on to further processing, for example, to remove the carbon dioxide, water or other components.

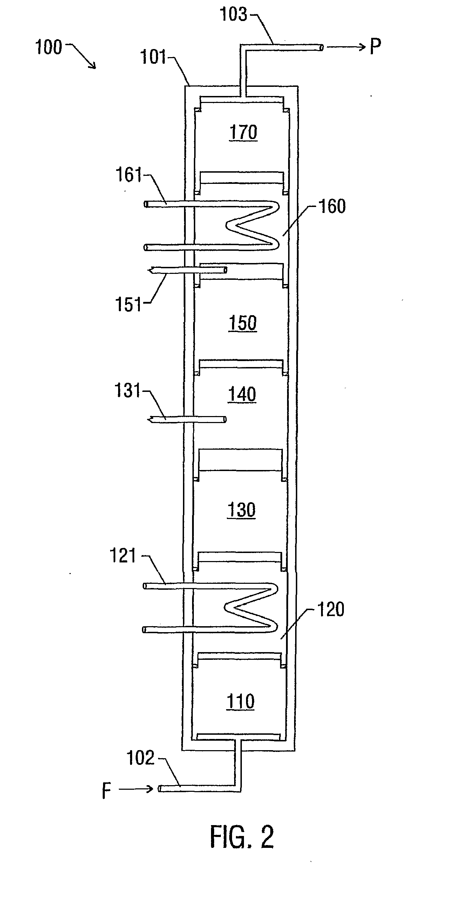

In one illustrative embodiment of a fuel processor, a compact fuel processor is of modular construction with individual modular units, which are separable, rearrangeable, and individually replaceable. Referring to Figure 2, the compact fuel processor 100 includes a series of individual modules (110, 120, 130, 140, 150, 160 and 170). The modular units may be used in any orientation, e.g., vertical or horizontal orientation, and is adapted to be used in conjunction with a fuel cell such that the hydrogen rich product gas of the reactor described herein is supplied directly to a fuel cell as a feed stream. While the modules can have any cross sectional configuration, such as circular, rectangular, triangular, etc., a circular cross section is preferred with the fuel processor 100 being of a generally tubular shape.

Fuel processor 100 as shown in Figure 2 effects the process diagrammatically illustrated in Figure 1. Feed stream F is introduced through inlet pipe 102 and product gas P is drawn off via outlet pipe 103. The apparatus 100 includes several modules that may be stacked to form a modular assembly that can be modified by the replacement of individual modules. Each module performs a separate operational function and is generally configured as shown in Figure 2. Module 110 is the autothermal reforming module corresponding to process step A of Figure 1. Module 120 is a cooling step corresponding to process step B of Figure 1. In this illustrative embodiment, heat exchanger 121 is shown as a general heat sink for Module 120. Module 130 is a purifying module corresponding to process step C of Figure 1. Module 140 is an optional mixing step corresponding to process step D of Figure 1. Feed nozzle 131 provides an optional water stream feed to Module 140 to aid in driving the water gas shift reaction (Equation IV) of Module 150. Module 150 is a water gas shift module corresponding to process step E of Figure 1. Feed nozzle 151 provides a source for oxygen to process gas for the oxidation reaction (Equation V) of Module 170. Module 150 also contains a heat exchanger (not shown) positioned within or surrounding the catalyst bed so as to maintain a desired water gas shift reaction temperature. Module 160 is a cooling step corresponding to process step F of Figure 1. In this illustrative embodiment, heat exchanger 161 is shown as a general heat sink for Module 160. Module 170 is an oxidation step corresponding to process step G of Figure 1. Module 170 also contains a heat exchanger (not shown) positioned within or surrounding the catalyst bed so as to maintain a desired oxidation reaction temperature. One of skill in the art should appreciate that the process configuration described in this illustrative embodiment may vary depending on numerous factors, including but not limited to feedstock quality and required product quality.

The present invention specifically relates to the methods and apparatus for heating a catalyst bed for start-up and for providing heat to a catalyst bed during transient operation to maintain desired reaction temperatures. Transient operation includes but is not limited to hydrocarbon fuel feedstock changes to the fuel processor, process upsets, changes in catalyst activity, and increased or decreased volumetric throughput of feed to the fuel processor. In fuel processors such as the ones described above, there are several catalysts that may be used with the present invention, including autothermal reforming catalysts, partial oxidation catalysts, steam reforming catalysts, water gas shift catalysts, preferential oxidation catalysts, and sulfur absorbents. In these exothermic catalyst beds, heating the catalyst to reaction temperature is important for efficiently starting-up a fuel processor from a cold start. Because one envisioned use for compact fuel processors is in automotive vehicles, a solution utilizing electrical heating elements is desirable. Furthermore, transient operation is an important issue for ensuring stable hydrogen rich gas supply for a fuel cell that is fed directly from a fuel processor.

In general, an electrical heating element may directly or indirectly heat the catalyst. The direct heating of catalyst is achieved by having direct contact of the heater element with the catalyst. Indirect heating is achieved by direct heating of a fluid, such as a process flow, which in turn flows through the catalyst, thereby transferring heat to the catalyst. Additionally, indirect heating may be achieved by placing the heating element within a sheath which is then either in direct contact with the catalyst or fluid which flows through the catalyst. By these means, catalyst of many forms may employ this catalyst heater including pellets, extrudates, spheres, and monoliths. The catalyst heater in accordance with this invention can be made of any resistive wire, cartridges or rods that can be formed as outlined below. A power source, such as an electric power source, provides the energy to produce the heat.

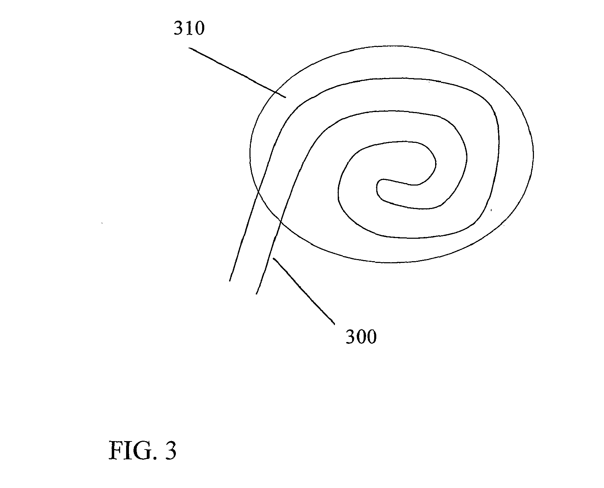

Referring now to Figure 3, face heater 300 can be utilized to provide heat to a catalyst bed face 310. The catalyst bed face is represented in this illustrative embodiment as one end of a cylindrically shaped catalyst bed. It will be appreciated by one of skill in the art that the orientation of the catalyst bed may either be vertical or horizontal in the present invention. In this illustrative embodiment, face heater 300 is an electrical heating element formed in a spiral design along the face of the catalyst bed, although other illustrative embodiments may be utilized to provide sufficient heat transfer to the catalyst bed face. By passing a small flow of reactants through the electrical heating element and catalyst bed, the exothermic reaction is initiated at the face of the catalyst bed. The heat provided by the face heater diffuses through the volume of the catalyst bed and additionally the heat of reaction produced at the catalyst bed face propagates throughout the catalyst bed thereby heating the catalyst bed for start-up. A preferred aspect of this illustrative embodiment is the use of the face heater 300 on the upstream face of the catalyst bed (i.e. the face of the catalyst bed that sees the reactor feed) such that the heat of reaction is carried into the "cold" catalyst to improve start-up efficiency of the catalyst.

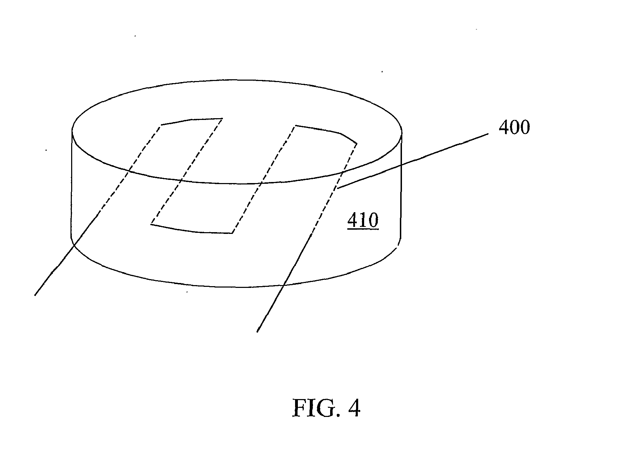

Referring now to Figure 4, the electrical heating element 400 is woven through the catalyst bed 410. In this illustrative embodiment, the electrical heating element is woven through either a catalyst bed of pellets, extrudates, spheres, etc., or through a monolithic catalyst structure. The weaving design (such as a coil) may be designed for optimal heating of the catalyst bed. This illustrative embodiment provides heating from the inside of the catalyst outwards. The flowing a fluid through the catalyst during heating is optional.

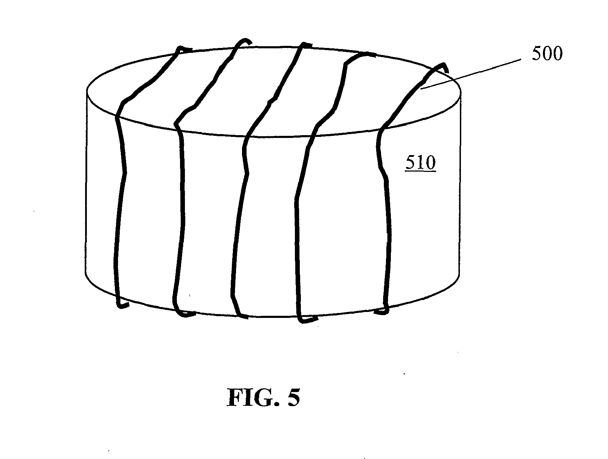

Referring now to Figure 5, the electrical heating element 500 is wrapped around a monolithic catalyst structure 510. This provides heating from the outside of the catalyst towards the center. The flowing a fluid through the catalyst during heating is optional.

Another illustrative embodiment includes a reactor in a fuel processor that includes a catalyst bed, a cooling coil positioned within the catalyst bed for removing excess heat during normal operation, and an electrical heating element positioned within the cooling coil for heating the catalyst to a desired reaction temperature during start-up and during transient operation. This is an example of sheathed heating as described above. One of skill in the art should appreciate that many advantages of this illustrative embodiment are that it provides heat to the catalyst for fast and efficient start-up, it preheats the hydrocarbon fuel feed to the fuel processor which may pass through the cooling coil in a compact fuel processor design, and it assists the reactor in maintaining reaction temperature during transient operation.

While the apparatus, compositions and methods of this invention have been described in terms of preferred or illustrative embodiments, it will be apparent to those of skill in the art that variations may be applied to the process described herein without departing from the concept and scope of the invention. All such similar substitutes and modifications apparent to those skilled in the art are deemed to be within the scope and concept of the invention as it is set out in the following claims.

For the avoidance of doubt, the present invention includes the subject-matter of the following numbered paragraphs (hereafter "para.")
1. A method for heating a catalyst bed for start-up, comprising:
   providing a catalyst bed having an upstream face and a downstream face;
   providing an electrical heating element positioned along one face of the catalyst
      bed;
   passing a small flow of reactants through the electrical heating element and
      catalyst bed; and
   heating the electrical heating element to initiate an exothermic reaction at the face
      of the catalyst bed, wherein the heat of reaction propagates throughout the catalyst bed thereby heating the catalyst bed for start-up.
2. The method of para.1, wherein the electrical heating element is positioned along the upstream face of the catalyst bed.
3. The method of para.1, wherein the electrical heating element is formed in a spiral design along one face of the catalyst bed.
4. The method of para.1, wherein the catalyst bed is selected from the group consisting of pellets, extrudates, spheres, monoliths, and any combinations thereof.
5. The method of para.1, wherein the catalyst bed contains catalyst selected from the group consisting of autothermal reforming catalysts, partial oxidation catalysts, steam reforming catalysts, water gas shift catalysts, preferential oxidation catalysts, anode tailgas oxidation catalysts, and sulfur absorbents.
6. A reactor module for use in a compact fuel processor, comprising:
   a catalyst bed having an upstream face and a downstream face; and
   an electrical heating element positioned along the upstream face of the catalyst bed, the heating element capable of initiating an exothermic reaction at the upstream face of the catalyst bed in the presence of a small flow of reactants.
7. The reactor module of para. 6, wherein the electrical heating element is formed in a spiral design.
8. The reactor module of para.6, wherein the catalyst bed is selected from the group consisting of pellets, extrudates, spheres, monoliths, and any combinations thereof.
9. The reactor module of para. 6, wherein the catalyst bed contains catalyst selected from the group consisting of autothermal reforming catalysts, partial oxidation catalysts, steam reforming catalysts, water gas shift catalysts, preferential oxidation catalysts, anode tailgas oxidation catalysts, and sulfur absorbents.
10. A reactor module for use in a compact fuel processor, comprising:
   a catalyst bed;
   a cooling coil positioned substantially within the catalyst bed for removing excess
      heat during normal operation; and
   an electrical heating element positioned within the cooling coil, the heating
      element capable of heating the catalyst to a desired reaction temperature.
11. The reactor module of para.10, wherein the catalyst bed is selected from the group consisting of pellets, extrudates, spheres, monoliths, and any combinations thereof.
12. The reactor module of para.10, wherein the catalyst bed contains catalyst selected from the group consisting of autothermal reforming catalysts, partial oxidation catalysts, steam reforming catalysts, water gas shift catalysts, preferential oxidation catalysts, anode tailgas oxidation catalysts, and sulfur absorbents.
13. A method for heating a catalyst bed, comprising:
   providing an electrical heating element positioned within a cooling coil located
      substantially within the catalyst bed; and
   heating the electrical heating element thereby heating the catalyst bed to a desired
      temperature.
14. The method of para.13, wherein the desired temperature is the start-up temperature.
15. The method of para.13, wherein the desired temperature is the desired reaction temperature during transient operation.
16. A method for heating a catalyst bed to a desired temperature, comprising:
   providing a catalyst bed in communication with an electrical heating element; and
   heating the electrical heating element so as to maintain the desired temperature of
      the catalyst bed.
17. The method of para. 16, wherein the desired temperature is the start-up temperature.
18. The method of para.16, wherein the desired temperature is the desired reaction temperature during transient operation.
19. The method of para.16, wherein the electrical heating element is weaved through the catalyst bed.
20. The method of para.16, wherein the catalyst bed is a monolith.
21. The method of para. 18, wherein the electrical heating element is wrapped around the monolith.
22. A method for heating a catalyst bed to a desired temperature, comprising:
   positioning an electrical heating element upstream of the catalyst bed; and
   passing a fluid across the electrical heating element and through the catalyst bed,
      wherein the catalyst bed is heated to the desired temperature.
23. The method of para. 22, wherein the desired temperature is the start-up temperature.
24. The method of para. 22, wherein the desired temperature is the desired reaction temperature during transient operation.

## Claims

1. A reactor module for use in a compact fuel processor, comprising:
a catalyst bed;
a cooling coil positioned substantially within the catalyst bed for removing excess
heat during normal operation; and
an electrical heating element positioned within the cooling coil, the heating
element capable of heating the catalyst to a desired reaction temperature.

2. The reactor module of claim 1, wherein the catalyst bed is selected from the group consisting of pellets, extrudates, spheres, monoliths, and any combinations thereof.

3. The reactor module of claim 1, wherein the catalyst bed contains catalyst selected from the group consisting of autothermal reforming catalysts, partial oxidation catalysts, steam reforming catalysts, water gas shift catalysts, preferential oxidation catalysts, anode tailgas oxidation catalysts, and sulfur absorbents.

4. A method for heating a catalyst bed, comprising:
providing an electrical heating element positioned within a cooling coil located
substantially within the catalyst bed; and
heating the electrical heating element thereby heating the catalyst bed to a desired
temperature.

5. The method of claim 4, wherein the desired temperature is the start-up temperature.

6. The method of claim 4, wherein the desired temperature is the desired reaction temperature during transient operation.
